# EUROPEAN PATENT APPLICATION

(11) **EP 4 751 842 A1**
(43) Date of publication of application: **03.06.2026**
(21) Application number: 24860235.1
(22) Date of filing: 07.08.2024
(51) Int. Cl.: B23Q 7/04, B23Q 15/013, B65G 47/90

(54) **GANTRY LOADER CONTROL METHOD**

(30) Priority: 28.08.2023 KR 20230112957
(71) Applicant: DN Solutions Co., Ltd., Changwon-si, Gyeongsangnam-do 51537 (KR)
(72) Inventor: PARK, Sangyoung, Changwon-si Gyeongsangnam-do 51537 (KR)
(74) Representative: BCKIP Part mbB
(86) International application number: PCT/KR2024/011634
(87) International publication number: WO 2025/048314

(57) **Abstract**

Disclosed is an automation line comprising a plurality of gantry loaders, machine tools, and peripheral devices on a single guide beam. A gantry loader control device shares information on the plurality of gantry loaders, the machine tools, and the peripheral devices so that the plurality of gantry loaders are controlled according to priority without causing interference with each other. In addition, when a gantry loader or a machine tool fails, the failed gantry loader or machine tool is processed to be disabled and excluded from operation, thereby enabling the automation line to operate without interruption and improving productivity of the automation line.

## Description

### [Technical Field]

The present invention relates to a gantry loader to supply and discharge a workpiece to and from a machine tool, and more particularly, to a method for controlling a plurality of gantry loaders installed on a single guide beam.

### [Background Art]

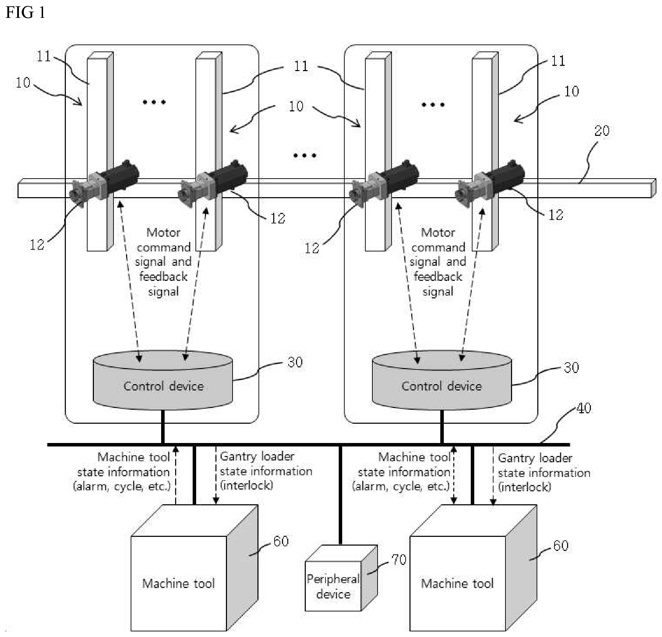

Generally, as illustrated in FIG. 1, a gantry loader 10 is installed as an auxiliary device on a machine tool 60, such as a turning center, and performs a function of supplying a workpiece to a machining part of the machine tool 60 or discharging and loading a machined workpiece from the machining part, in conjunction with a peripheral device 70 which is capable of supplying or loading the workpiece. Such the gantry loader 10 includes a horizontal guide beam 20 installed on an upper portion of the machine tool 60 in a direction of a rotation axis of the machining part of the machine tool 60, an arm 11 configured to slide on the guide beam 20, and a gripper provided at an end portion of the arm 11 and configured to grip the workpiece to be supplied or discharged. In addition, the peripheral device 70 capable of loading the workpiece is installed at one side of the machine tool 60 and the gantry loader 10.

Such the gantry loader 10 may be installed for each machine tool 60, or in some cases, a single gantry loader 10 may be installed in a form of extending over upper portions of two or more machine tools 60 installed continuously and supply or discharge the workpiece for each of the machine tools 60.

However, when the gantry loader 10 is installed for each machine tool 60, there is a problem in that an installation area and cost increase. Furthermore, if a single gantry loader 10 is installed to take charge of two or more machine tools 60, an operation of the gantry loader 10 may not match a workpiece discharge and supply cycle of the machine tool 60, causing the operation of the machine tool 60 to be delayed, thereby reducing productivity of an automation line.

In order to overcome such a problem, a case where two or more gantry loaders 10 are installed and operated on a single guide beam 20 may be assumed. However, when two or more gantry loaders 10 are installed on a single guide beam 20 and configured to operate in conjunction with a plurality of machine tools 60 as described above, an operation range of each gantry loader 10 must be limited in order to avoid collision or interference between the plurality of gantry loaders 10 installed on the single guide beam 20.

Consequently, even if a plurality of gantry loaders 10 are installed on a single guide beam 20, there is no advantage other than that each gantry loader 10 shares the single guide beam 20.

In addition, when a plurality of gantry loaders 10 are installed on a single guide beam 20 and controlled independently in an automation line consisting of a continuous machining process, the gantry loaders 10 must be installed with a sufficient distance between the respective gantry loaders 10 in order to avoid collision or interference between the respective gantry loaders 10. This not only causes a problem that the size of the automation line increases, but also causes a problem that the productivity of the continuous automation line decreases due to unnecessary control such as waiting time and stop operation according to a preset speed and work order.

Furthermore, in an automation line in which a plurality of gantry loaders 10 are installed on a single guide beam 20, when one gantry loader 10 or machine tool 60 fails, the entire plurality of gantry loaders 10 and machine tools 60 constituting the automation line must be stalled, causing a problem that the operation of the automation line is suspended.

Meanwhile, Patent Document 1 discloses a structure in which one gantry loader is installed in a group of a plurality of machine tools, each consisting of two machine tools 60. Patent Document 1 implements an automation system that reduces operator intervention in a continuous machining line by controlling a gantry loader to move in a machining direction of a workpiece in a series of continuous machining lines. However, in such a system, as pointed out above, since one gantry loader handles at least two machine tools, the operation of the gantry loader may not match a workpiece discharge and supply cycle of the machine tool, thereby delaying the operation of the machine tool.

In addition, FIG. 1 of Patent Document 2 discloses a structure in which a plurality of carriages is installed on one cross slide (guide beam) and a gantry loader to be controlled independently is installed on each carriage in order to install a plurality of gantry loaders on a single guide beam. However, Patent Document 2 relates to transmitting a control command of a wireless communication method through a TCP/IP module between a main control panel installed on the ground and a sub-control panel installed on the carriage. This is nothing more than a structure that a plurality of gantry loaders to be controlled independently is installed on a single guide beam. Therefore, in order to avoid collision or interference between the gantry loaders, unnecessary waiting time and stop operations occur according to a preset speed and work order, which causes a decrease in productivity of a continuous automation line. Moreover, there arises a problem that the operation of the automation line must be stopped when one of specific gantry loaders or machine tools constituting the automation line fails.

### [Priority Art Document]

(Patent Document 1) Korean Registered Patent Publication No. 10-2308542
(Patent Document 2) Korean Laid-Open Patent Publication No. 10-2008-0099075

### [Detailed Description of Invention]

### [Technical Problem]

An objective of the present invention for solving the above-mentioned problems is to improve productivity of an automation line by sharing basic information such as work status, position, path, target point, and speed among a plurality of gantry loaders installed on a single guide beam, machine tools, and peripheral devices, so that an entry order or speed of each gantry loader based on a work order is sequentially controlled according to priority in a machining area of the machine tool.

Another objective of the present invention is to minimize suspension of operation of an automation line by enabling the automation line to be operated only with normally operating gantry loaders or machine tools by excluding an unusable gantry loader or machine tool in a case that a certain gantry loader or machine tool among a plurality of installed gantry loaders or machine tools becomes unusable due to a malfunction or the like, without stopping the operation of the entire automation line.

Still another objective of the present invention is to reduce a size of an automation line by reducing an installation interval of gantry loaders by performing an optimization control of a plurality of gantry loaders according to priority.

### [Technical Solution]

A gantry loader control method according to one aspect of the present invention for solving the above problems in an automated line including a plurality of machine tools 60 configured to process a workpiece, a plurality of peripheral devices 70 configured to load the workpiece, and a plurality of gantry loaders 10 configured to reciprocate on a single guide beam 20 installed to allow the workpiece to be supplied or discharged between the machine tools 60 and the peripheral devices 70, wherein a control device 30 controls each of the gantry loaders 10 by sharing information with the machine tools 60 and the peripheral devices 70, the method comprises:
a priority setting step (S10) of setting a control priority for each operating state of the gantry loader 10, the machine tool 60, and the peripheral device 70;
an information acquisition step (S20) of acquiring, by the control device 30 for controlling the plurality of gantry loaders 10, information on each of the gantry loaders 10, the machine tools 60, and the peripheral devices 70, and sharing the information with a control device 30 of an adjacent gantry loader 10 through a communication line 40;
a priority assignment step (S30) of assigning priority values set in the priority setting step (S10) to respective variables corresponding to the gantry loader 10, the machine tool 60, and the peripheral device 70 based on the information acquired in the information acquisition step (S20);
a gantry loader priority comparison step (S40) of comparing whether a priority of the gantry loader 10 is equal to a priority of the machine tool 60 or the peripheral device 70;
a machine tool priority comparison step (S41) of comparing the priority of the machine tool 60 with the priority of the peripheral device 70 when the priority of the gantry loader 10 in the gantry loader priority comparison step (S40) is not equal to the priority of the machine tool 60 or the peripheral device 70;
a gantry loader movement command step (S50) comprising a machine-tool-directed movement command step (S51) of commanding the gantry loader 10 to move toward the machine tool 60 or a peripheral-device-directed movement command step (S52) of commanding the gantry loader 10 to move toward the peripheral device 70;
a movement-path interference determination step (S60) of determining whether a current position (An-1) of an adjacent gantry loader is included in a movement path of the gantry loader 10 when the gantry loader 10 moves from a gantry loader current position (An) to a gantry loader target position (Bn) in response to a movement command;
a task priority determination step (S70) of, when the adjacent gantry loader current position (An-1) is included in the movement path of the current gantry loader 10 in the movement-path interference determination step (S60), comparing and determining priority values of the current gantry loader 10 and the adjacent gantry loader 10 assigned in the priority assignment step (S30), and commanding a gantry loader 10 with a lower-priority, based on a result of the determination, to retreat to or wait in a predetermined safety area in which a gantry loader 10 with a higher-priority is not interfered in moving to the target position (Bn); and
a task execution step (S80) of commanding the current gantry loader 10 to move to the gantry loader target position (Bn) when interference with the adjacent gantry loader 10 does not occur in the current gantry loader 10 in the movement-path interference determination step (S60), and commanding the gantry loader 10 with the higher priority to move to the gantry loader target position (Bn) as a result of comparing the priority values of the current gantry loader 10 and the adjacent gantry loader 10 in the task priority determination step (S70) when interference occurs between the current gantry loader 10 and the adjacent gantry loader 10, and then returning to the information acquisition step (S20) after the movement command of the gantry loader 10 with the higher priority.

In a preferred embodiment, the control priority for each operating state in the priority setting step (S10) comprises a first priority when the gantry loader 10 is in a state of waiting to input or discharge a workpiece to or from the machine tool 60; a second priority when the gantry loader 10 is in a state of receiving a pre-call to handle a workpiece; a third priority when the gantry loader 10 is in a state of discharging a workpiece from the peripheral device 70; and a fourth priority when the gantry loader 10 is in a state of loading a workpiece into the peripheral device 70, based on the content of a control signal commanded to operate the gantry loader 10 and the machine tool 60 or the peripheral device 70.

In a preferred embodiment, the information acquired in the information acquisition step (S20) includes information on the gantry loader current position (An), the gantry loader target position (Bn), a machine tool state (Gn), a peripheral device state (Hn), and a gantry loader state (In).

In a preferred embodiment, the information acquired in the information acquisition step (S20) further includes gantry loader alarm information (Jn), machine tool alarm information (Kn), and bypass on/off information (Ln).

In a preferred embodiment, in the priority assignment step (S30), when the gantry loader 10 is gripping a workpiece, a priority value according to the gantry loader state (In) becomes 1; when the machine tool 60 is waiting after completion of workpiece machining, a priority value according to the machine tool state (Gn) becomes 1; and when the peripheral device 70 is waiting to discharge a workpiece, a priority value according to the peripheral device state (Hn) becomes 3.

In a preferred embodiment, the gantry loader priority comparison step (S40) compares the priority value according to the gantry loader state (In) assigned in the priority assignment step (S30) with the machine tool state (Gn) priority value and the peripheral device state (Hn) priority value, and determining whether the machine tool state (Gn) priority value is equal to the gantry loader state (In) priority value or whether the peripheral device state (Hn) priority value is equal to the gantry loader state (In) priority value.

In a preferred embodiment, the machine tool priority comparison step (S41) determines whether the machine tool state (Gn) priority value is greater or smaller than the peripheral device state (Hn) priority value when the machine tool state (Gn) priority value is not equal to the gantry loader state (In) priority value, or the peripheral device state (Hn) priority value is not equal to the gantry loader state (In) priority value.

In a preferred embodiment, the machine-tool-directed movement command step (S51) transmits an operation command to the servo motor 12 to cause the gantry loader 10 to move toward the machine tool 60 when the machine tool state (Gn) priority value is equal to the gantry loader state (In) priority value in the gantry loader priority comparison step (S40), or when the machine tool state (Gn) priority value is smaller than the peripheral device state (Hn) priority value in the machine tool priority comparison step (S41); and
the peripheral-device-directed movement command step (S52) transmits an operation command to the servo motor 12 to cause the gantry loader 10 to move toward the peripheral device 70 when the peripheral device state (Hn) priority value is equal to the gantry loader state (In) priority value in the gantry loader priority comparison step (S40), or when the machine tool state (Gn) priority value is greater than the peripheral device state (Hn) priority value in the machine tool priority comparison step (S41).

In a preferred embodiment, the comparison of priority values between the current gantry loader 10 and the adjacent gantry loader 10 assigned in the priority assignment step (S30) in the task priority determination step (S70) determines whether a value obtained by adding the machine tool state (Gn) priority value or the peripheral device state (Hn) priority value to the gantry loader state (In) priority value of the current gantry loader 10 is smaller than a value obtained by adding the machine tool state (Gn-1) priority value or the peripheral device state (Hn-1) priority value to the gantry loader state (In-1) priority value of the adjacent gantry loader 10.

In a preferred embodiment, the task priority determination step (S70) comprises a safety area avoidance command step (S71) of commanding the adjacent gantry loader 10 to retreat to a predetermined safety area that does not interfere with a path along which the current gantry loader 10 moves when the priority by operating state of the current gantry loader 10 is higher than the priority by operating state of the adjacent gantry loader 10; and
a safety area waiting command step (S72) of commanding the current gantry loader 10 to wait in a predetermined safety area that does not interfere with a path along which the adjacent gantry loader 10 moves when the priority by operating state of the current gantry loader 10 is lower than the priority by operating state of the adjacent gantry loader 10.

In a preferred embodiment, the predetermined safety area in the safety area avoidance command step (S71) and the safety area waiting command step (S72) is set to a distance obtained by adding a mechanical non-contact distance (α) value capable of excluding contact between mechanical parts of the current gantry loader 10 and the adjacent gantry loader 10 and a braking distance (β) upon stopping at a maximum speed of the corresponding gantry loader 10.

In a preferred embodiment, the method further comprises: a gantry loader alarm information determination step (S110) of determining whether the gantry loader alarm information (Jn) acquired in the information acquisition step (S20) is an emergency stop after the information acquisition step (S20), and returning the control step to the information acquisition step (S20) when the gantry loader alarm information (Jn) is not the emergency stop;
a gantry loader disabling processing step (S120) of moving a gantry loader 10 whose gantry loader alarm information (Jn) is the emergency stop to a parking position where interference with movement of the adjacent gantry loader 10 does not occur when the gantry loader alarm information (Jn) is the emergency stop in the gantry loader alarm information determination step (S110);
an acquired information invalidation step (S130) of cutting off power to the servo motor 12 of the gantry loader 10 whose gantry loader alarm information (Jn) is the emergency stop, simultaneously invalidating information of the gantry loader 10 acquired in the information acquisition step (S20) to exclude the gantry loader 10 whose gantry loader alarm information (Jn) is the emergency stop from a control target, and then returning the control step to the information acquisition step (S20); and
a gantry loader normalization step (S140) of removing a cause of an emergency stop signal of the gantry loader 10 disabled in the acquired information invalidation step (S130) to normalize the disabled gantry loader 10, and returning the control step to the information acquisition step (S20).

In a preferred embodiment, the gantry loader disabling processing step (S120) comprises a gantry loader servo motor availability determination step (S121) of determining whether an encoder signal is generated in the servo motor 12 performing movement of the gantry loader 10; and
a gantry loader parking position movement step (S122) of controlling the servo motor 12 of the gantry loader 10 whose gantry loader alarm information (Jn) is the emergency stop in a manual mode to move the gantry loader 10 in the emergency stop state to the parking position where interference with movement of the adjacent gantry loader 10 does not occur when it is determined that the encoder signal is generated in the servo motor 12 in the gantry loader servo motor availability determination step (S121), and forcibly moving the gantry loader 10 whose gantry loader alarm information (Jn) is the emergency stop to the parking position where interference with operation of the adjacent gantry loader 10 does not occur when it is determined that the encoder signal is not generated in the servo motor 12, and inputting a gantry loader current position (An) to be disabled into the control device 30 as the parking position after the forced movement to the parking position.

In a preferred embodiment, after the acquired information invalidation step (S130), current position (An) information of the disabled gantry loader 10 is reset to the parking position.

In a preferred embodiment, the method further comprises: a machine tool alarm information determination step (S210) of determining whether the machine tool alarm information (Kn) acquired in the information acquisition step (S20) is an emergency after the information acquisition step (S20), and returning the control step to the information acquisition step (S20) if the machine tool alarm information (Kn) is the emergency;
a bypass function selection determination step (S220) of determining whether bypass on/off information (Ln) is selected as ON in the control device 30 to determine whether to make the gantry loader 10 bypass the machine tool 60 where the machine tool alarm information (Kn) is generated when the machine tool alarm information (Kn) is the emergency in the machine tool alarm information determination step (S210);
a machine tool disabling step (S230) of controlling the gantry loader 10 to omit a process of entering a workpiece into the machine tool 60 where the machine tool alarm information (Kn) is the emergency and to bypass by activating a bypass function of the gantry loader 10 when the bypass on/off information (Ln) is selected as ON in the bypass function selection determination step (S220), simultaneously initializing acquired information of the machine tool 60 acquired in the information acquisition step (S20), and controlling the control step to return to the information acquisition step (S20), and transmitting the machine tool alarm information (Kn) to the control device 30 of the gantry loader 10 and stopping operations of the corresponding gantry loader 10 and the machine tool 60 where the machine tool alarm information (Kn) is generated when the bypass on/off information (Ln) is selected as OFF in the bypass function selection determination step (S220); and
a machine tool normalization step (S240) of repairing the machine tool 60 where the machine tool alarm information (Kn) is generated in the machine tool disabling step (S230), normalizing the disabled machine tool 60), and returning to the information acquisition step (S20).

In a preferred embodiment, the method further comprises: a machine tool alarm information determination step (S210) of determining whether the machine tool alarm information (Kn) acquired in the information acquisition step (S20) is an emergency after the information acquisition step (S20), and returning the control step to the information acquisition step (S20) if the machine tool alarm information (Kn) is the emergency;
a machine tool disabling step (S230) of controlling the gantry loader 10 to omit a process of entering a workpiece into the machine tool 60 where the machine tool alarm information (Kn) is the emergency and to bypass and pass by activating a bypass function of the gantry loader 10 when the machine tool alarm information (Kn) is the emergency in the machine tool alarm information determination step (S210), simultaneously initializing acquired information of the machine tool 60 acquired in the information acquisition step (S20), and controlling the control step to return to the information acquisition step (S20); and
a machine tool normalization step (S240) of repairing the machine tool 60 where the machine tool alarm information (Kn) is generated in the machine tool disabling step (S230), normalizing the disabled machine tool 60, and returning to the information acquisition step (S20).In a preferred embodiment, a gantry loader control method according to another aspect of the present invention in an automated line including a plurality of machine tools (60) configured to process a workpiece, a plurality of peripheral devices (70) configured to load the workpiece, and a plurality of gantry loaders (10) configured to reciprocate on a single guide beam (20) to allow the workpiece to be supplied or discharged between the machine tools (60) and the peripheral devices (70), wherein a control device (30) controls each of the gantry loaders (10) by sharing information with the machine tools (60) and the peripheral devices (70), the method comprising:
   an information acquisition step (S20) of acquiring, by the control device (30) for controlling the plurality of gantry loaders (10), gantry loader alarm information (Jn) of each of the gantry loaders (10), and sharing the information with a control device (30) of an adjacent gantry loader (10) through a communication line (40);
   a gantry loader alarm information determination step (S110) of determining whether the gantry loader alarm information (Jn) acquired in the information acquisition step (S20) indicates an emergency stop, and returning a control step to the information acquisition step (S20) when the gantry loader alarm information (Jn) does not indicate an emergency stop;
   a gantry loader disabling processing step (S120) of, when the gantry loader alarm information (Jn) indicates an emergency stop in the gantry loader alarm information determination step (S110), moving the gantry loader (10) having the emergency stop alarm information (Jn) to a parking position where interference with movement of the adjacent gantry loader (10) does not occur;
   an acquired information invalidation step (S130) of shutting off power to a servo motor (12) of the gantry loader (10) having the emergency stop alarm information (Jn), simultaneously invalidating information on the gantry loader (10) acquired in the information acquisition step (S20) to exclude the gantry loader (10) having the emergency stop alarm information (Jn) from control targets, and then returning the control step to the information acquisition step (S20); and
   a gantry loader normalization step (S140) of removing a cause of an emergency stop signal of the gantry loader (10) disabled in the acquired information invalidation step (S130) to normalize the disabled gantry loader (10), and returning the control step to the information acquisition step (S20).

In a preferred embodiment, the gantry loader disabling processing step (S120) includes: a gantry loader servo motor availability determination step (S121) of determining whether an encoder signal is generated in the servo motor (12) performing movement of the gantry loader (10); and
a gantry loader parking position movement step (S122) of, when it is determined that the encoder signal is generated in the servo motor (12) in the gantry loader servo motor availability determination step (S121), controlling the servo motor (12) of the gantry loader (10) having the emergency stop alarm information (Jn) in a manual mode to move the gantry loader (10) in an emergency stop state to the parking position where interference with movement of the adjacent gantry loader (10) does not occur, and when it is determined that the encoder signal is not generated in the servo motor (12), forcibly moving the gantry loader (10) having the emergency stop alarm information (Jn) to the parking position where interference with an operation of the adjacent gantry loader (10) does not occur, and inputting a current position (An) of the gantry loader to be disabled into the control device (30) as the parking position after the forced movement to the parking position.

In a preferred embodiment, after the acquired information invalidation step (S130), information on the current position (An) of the disabled gantry loader (10) is reset to the parking position.

In a preferred embodiment, a gantry loader control method according to still another aspect of the present invention

in an automated line including a plurality of machine tools (60) configured to process a workpiece, a plurality of peripheral devices (70) configured to load the workpiece, and a plurality of gantry loaders (10) configured to reciprocate on a single guide beam (20) installed to allow the workpiece to be supplied or discharged between the machine tools (60) and the peripheral devices (70), wherein a control device (30) controls each of the gantry loaders (10) by sharing information with the machine tools (60) and the peripheral devices (70), the method comprising:
an information acquisition step (S20) of acquiring, by the control device (30) for controlling the plurality of gantry loaders (10), information on each of the gantry loaders (10) and the machine tools (60), and sharing the information with a control device (30) of an adjacent gantry loader (10) through a communication line (40);
a machine tool alarm information determination step (S210) of determining whether machine tool alarm information (Kn) acquired in the information acquisition step (S20) indicates an emergency, and returning a control step to the information acquisition step (S20) when the machine tool alarm information (Kn) indicates an emergency;
a bypass function selection determination step (S220) of determining whether bypass on/off information (Ln) is selected as ON in the control device (30) to determine whether to make the gantry loader (10) bypass the machine tool (60) where the machine tool alarm information (Kn) is generated, when the machine tool alarm information (Kn) indicates an emergency in the machine tool alarm information determination step (S210);
a machine tool disabling step (S230) of, when the bypass on/off information (Ln) is selected as ON in the bypass function selection determination step (S220), activating a bypass function of the gantry loader (10) to control the gantry loader (10) to omit a process of entering the workpiece into the machine tool (60) where the machine tool alarm information (Kn) is the emergency and to bypass the machine tool (60), simultaneously initializing acquired information on the machine tool (60) acquired in the information acquisition step (S20), and controlling the control step to return to the information acquisition step (S20); and when the bypass on/off information (Ln) is selected as OFF in the bypass function selection determination step (S220), transmitting the machine tool alarm information (Kn) to the control device (30) of the gantry loader (10) and stopping operations of the corresponding gantry loader (10) and the machine tool (60) where the machine tool alarm information (Kn) is generated; and
a machine tool normalization step (S240) of repairing the machine tool (60) where the machine tool alarm information (Kn) is generated in the machine tool disabling step (S230), normalizing the disabled machine tool (60), and returning the control step to the information acquisition step (S20).

In a preferred embodiment, a gantry loader control method according to still further another aspect of the present invention
in an automated line including a plurality of machine tools (60) configured to process a workpiece, a plurality of peripheral devices (70) configured to load the workpiece, and a plurality of gantry loaders (10) configured to reciprocate on a single guide beam (20) to allow the workpiece to be supplied or discharged between the machine tools (60) and the peripheral devices (70), wherein a control device (30) controls each of the gantry loaders (10) by sharing information with the machine tools (60) and the peripheral devices (70), the method comprising:
an information acquisition step (S20) of acquiring, by the control device (30) for controlling the plurality of gantry loaders (10), information on each of the gantry loaders (10) and the machine tools (60), and sharing the information with a control device (30) of an adjacent gantry loader (10) through a communication line (40);
a machine tool alarm information determination step (S210) of determining whether machine tool alarm information (Kn) acquired in the information acquisition step (S20) indicates an emergency, and returning a control step to the information acquisition step (S20) when the machine tool alarm information (Kn) indicates an emergency;
a machine tool disabling step (S230) of, when the machine tool alarm information (Kn) indicates an emergency in the machine tool alarm information determination step (S210), activating a bypass function of the gantry loader (10) to control the gantry loader (10) to omit a process of entering the workpiece into the machine tool (60) where the machine tool alarm information (Kn) is the emergency and to bypass the machine tool (60), simultaneously initializing acquired information on the machine tool (60) acquired in the information acquisition step (S20), and controlling the control step to return to the information acquisition step (S20); and
a machine tool normalization step (S240) of repairing the machine tool (60) where the machine tool alarm information (Kn) is generated in the machine tool disabling step (S230), normalizing the disabled machine tool (60), and returning the control step to the information acquisition step (S20).

### [Advantageous Effects]

The present invention improves productivity of an automation line by causing an operation of a gantry loader (10) to be executed according to a task priority in the automation line in which a plurality of gantry loaders (10) is installed on a single guide beam (20) and operate in conjunction with machine tools (60) and peripheral devices (70). Furthermore, even if the gantry loader (10) or the machine tool (60) fails, the automation line can be operated only with normally operating gantry loaders (10) or machine tools (60) without interruption, thereby minimizing suspension of the operation of the automation line.

In addition, the present invention can optimize a size of the automation line because a distance between the respective gantry loaders (10) can be minimized through optimization control of each of the plurality of gantry loaders (10).

### [Brief Description of Drawings]

FIG. 1 is a conceptual diagram of an automation line showing a linkage configuration state among a plurality of gantry loaders installed on a single guide beam, machine tools, and peripheral devices, according to an embodiment of the present invention.
FIG. 2 is a control conceptual diagram of a plurality of gantry loaders installed on a single guide beam, according to an embodiment of the present invention.
FIG. 3 is a control flowchart illustrating a movement order of a plurality of gantry loaders installed on a single guide beam, according to an embodiment of the present invention.
FIG. 4 is a control flowchart for disabling a failed gantry loader or machine tool among a plurality of gantry loaders or among machine tools cooperating with the gantry loaders and excluding the failed gantry loader or machine tool from an operation of an automation line, according to an embodiment of the present invention.
FIG. 5 is a control flowchart for excluding a disabled machine tool among machine tools cooperating with a gantry loader, according to another embodiment of the present invention.

### [Best Mode for Embodiment of Invention]

Hereinafter, preferred embodiments of the present invention will be described with reference to FIGS. 1 to 5.

FIG. 1 is a conceptual diagram of an automation line showing a linkage configuration state among a plurality of gantry loaders 10, machine tools 60, and peripheral devices 70 installed on a single guide beam 20, according to an embodiment of the present invention.

Referring to FIG. 1, the automation line of the present embodiment includes a plurality of machine tools 60 configured to process a workpiece, a plurality of peripheral devices 70 configured to load the workpiece, and a plurality of gantry loaders 10 configured to reciprocate on a single guide beam 20 installed in a horizontal direction on upper portions of the machine tools 60 so as to supply or discharge the workpiece between the machine tools 60 and the peripheral devices 70. Each of the gantry loaders 10 is provided with a control device 30 containing information on the gantry loader 10, the machine tool 60, and the peripheral device 70, and the control devices 30 of the respective gantry loaders 10 are configured to share information with a control device 30 of an adjacent gantry loader 10 through a communication line 40.

More specifically, the gantry loader 10 has a single guide beam 20 installed in a horizontal direction. An arm 11 is installed in a vertical direction on the guide beam 20, and the arm 11 is provided with a plurality of gantry loaders 10 configured to reciprocate in the horizontal direction on the guide beam 20 by a servo motor 12. In addition, the plurality of gantry loaders 10 includes the control device 30 configured to communicate a motor command signal and a feedback signal to control the servo motor 12.

Meanwhile, the control device 30 may be configured such that a single control device 30 takes charge of and controls the plurality of gantry loaders 10.

In addition, such gantry loaders 10 are linked to each other so that the respective control devices 30 can share mutual control information through the communication line 40, and are also linked to share control information with the machine tools 60 and the peripheral devices 70.

Meanwhile, each of the control devices 30 acquires or generates information such as a current position (An), a target position (Bn), a speed (Cn), performed task information (Dn), a maximum speed parameter (En), and a synchronous control command (Fn) of the gantry loader 10, the machine tool 60, and the peripheral device, as well as a machine tool state (Gn), a peripheral device state (Hn), a gantry loader state (In), alarm information (Jn) of the gantry loader, alarm information (Kn) of the machine tool, and bypass on/off information (Ln), and shares the information among the respective control devices 30.

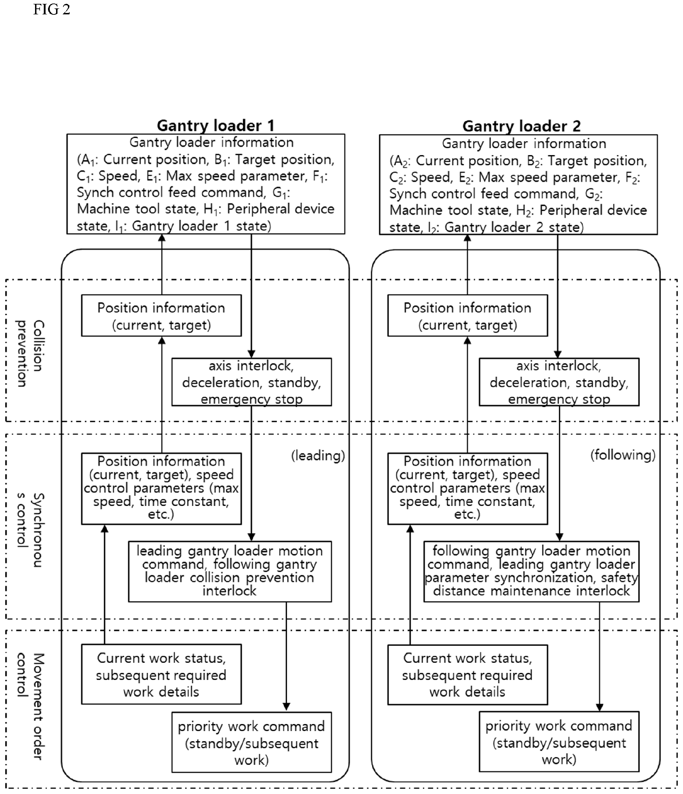

FIG. 2 is a control conceptual diagram of a plurality of gantry loaders 10 installed on a single guide beam 20, according to an embodiment of the present invention.

Referring to FIG. 2, the control device 30 of each gantry loader 10 shares the information to perform a function of collision prevention control, synchronous control, and movement order control between the respective gantry loaders 10 moving on the single guide beam 20.

More specifically, the collision prevention function performs a feed axis interlock, deceleration, transfer waiting, and emergency stop function of the servo motor 12 to avoid collision with an adjacent gantry loader 10 in a process of controlling the servo motor 12 to move the gantry loader 10 from the current position of the gantry loader 10 to the target position.

In addition, the synchronous control function provides information such as current position and target position information, and speed control parameters including a maximum speed and a time constant of a preceding gantry loader 10 to a following gantry loader 10, thereby controlling the following gantry loader 10 to follow an operation command of the preceding gantry loader 10. At this time, the preceding gantry loader 10 is controlled to operate an interlock function to prevent collision with the following gantry loader 10 according to a motion command, and the following gantry loader 10 is controlled to operate an interlock function for maintaining a safety distance during a synchronized operation with the preceding gantry loader 10 according to a motion command.

In addition, the movement order control function shares information among the gantry loader 10, the machine tool 60, and the peripheral device 70, and controls an priority of the gantry loader 10 according to an operating state.

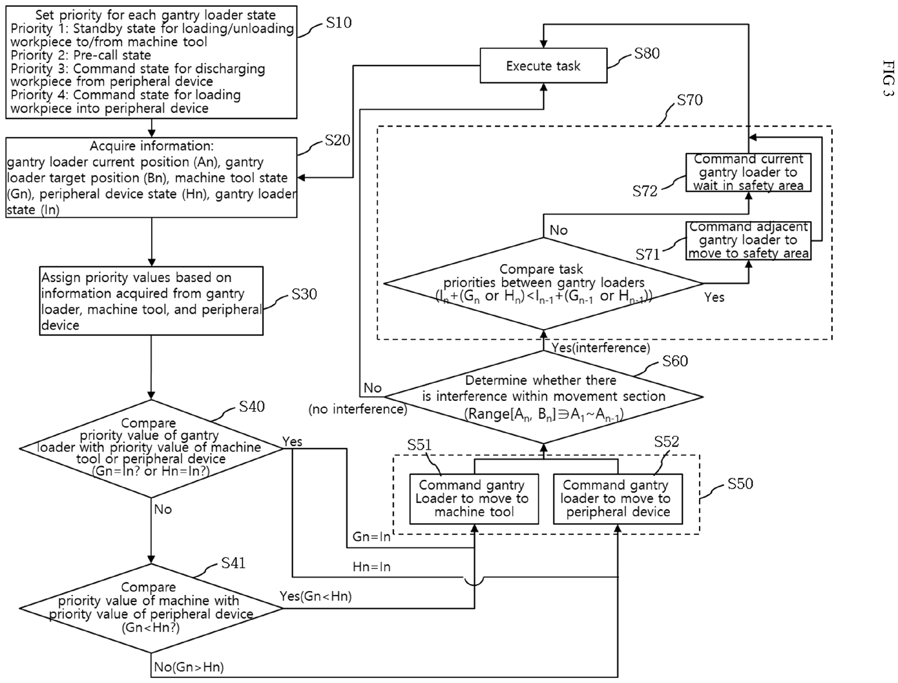

FIG. 3 is a control flowchart of a movement order of a plurality of gantry loaders 10 installed on a single guide beam 20, according to an embodiment of the present invention.

Referring to FIG. 3, each control device 30 controls each gantry loader 10 to avoid collision with an adjacent gantry loader 10 and move to the machine tool 60 or the peripheral device 70 according to priority to supply or discharge a workpiece as follows.

First, a priority setting step (S10) is executed.

This step sets a control priority for each operating state of the gantry loader 10, the machine tool 60, and the peripheral device 70. The priority by operating state is determined according to the content of a control signal commanded to operate the gantry loader 10 and the machine tool 60 or the peripheral device 70 as follows.

Preferably, the priority is set to a first priority when the gantry loader 10 is in a state of waiting to input or discharge a workpiece to or from the machine tool 60. In addition, the priority is set to a second priority when the gantry loader 10 is in a state of receiving a pre-call command to handle a workpiece. In addition, the priority is set to a third priority when the gantry loader 10 is in a state of discharging a workpiece from the peripheral device 70. In addition, the priority is set to a fourth priority when the gantry loader 10 is in a state of loading a workpiece into the peripheral device 70.

Meanwhile, the setting of the priority as described above may be further subdivided according to the degree of interference with the machine tool 60 or the peripheral device 70 and for optimization of operation when the gantry loader 10 performs an operation of supplying or discharging a workpiece to or from the machine tool 60 and the peripheral device 70.

Next, an information acquisition step (S20) is executed.

In this step, each control device 30 of the plurality of gantry loaders 10 installed on the single guide beam 20 acquires and recognizes information such as the gantry loader current position (An), the target position (Bn), the machine tool state (Gn), the peripheral device state (Hn), the gantry loader state (In), the gantry loader alarm information (Jn), the machine tool alarm information (Kn), and the bypass on/off information (Ln).

The above information may be generated in the control device 30 of each gantry loader 10, or generated or commanded by a separate control device such as a Programmable Machine Controller (PMC) configured to control the machine tool 60 and the peripheral device 70 in linkage with a numerical control device of the machine tool 60 or the numerical control device. When there is no command, it may be set to a value corresponding to an origin position of the gantry loader 10.

In addition, each control device 30 shares the above information with control devices 30 of other gantry loaders 10 installed on the guide beam 20 through the communication line 40.

Subsequently, a priority assignment step (S30) is executed.

In this step, each control device 30 assigns a priority value set in the priority setting step (S10) to respective variables corresponding to the gantry loader 10, the machine tool 60, and the peripheral device 70 based on the machine tool state (Gn), peripheral device state (Hn), and gantry loader state (In) information acquired in the information acquisition step (S20).

For example, when the gantry loader 10 is gripping a workpiece, a priority value according to the gantry loader state (In) becomes 1; when the machine tool 60 is waiting after completion of workpiece machining, a priority value according to the machine tool state (Gn) becomes 1; and when the peripheral device 70 is waiting to discharge a workpiece, a priority value according to the peripheral device state (Hn) becomes 3.

Subsequently, a gantry loader priority value comparison step (S40) is executed.

This step is a step in which each control device 30 compares and determines whether the priority of the gantry loader 10 is equal to the priority of the machine tool 60 or the peripheral device 70. The priority value according to the gantry loader state (In) assigned in the priority assignment step (S30) is compared with the machine tool state (Gn) priority value and the peripheral device state (Hn) priority value, and it is compared whether the machine tool state (Gn) priority value is equal to the gantry loader state (In) priority value or whether the peripheral device state (Hn) priority value is equal to the gantry loader state (In) priority value.

Subsequently, a machine tool priority value comparison step (S41) is executed.

This step is a step of comparing the priority of the machine tool 60 and the priority of the peripheral device 70 when the priority of the gantry loader 10 is not equal to the priority of the machine tool 60 or the peripheral device 70 in the gantry loader priority value comparison step (S40). That is, when the machine tool state (Gn) priority value and the gantry loader state (In) priority value are not equal, or the peripheral device state (Hn) priority value and the gantry loader state (In) priority value are not equal, it is compared whether the machine tool state (Gn) priority value is greater or smaller than the peripheral device state (Hn) priority value.

Subsequently, a gantry loader movement command step (S50) is executed.

This step includes a machine-tool-directed movement command step (S51) of commanding the gantry loader 10 to move toward the machine tool 60 and a peripheral-device-directed movement command step (S52) of commanding the gantry loader 10 to move toward the peripheral device 70.

In the machine-tool-directed movement command step (S51), when the machine tool state (Gn) priority value is equal to the gantry loader state (In) priority value in the gantry loader priority value comparison step (S40), or when the machine tool state (Gn) priority value is smaller than the peripheral device state (Hn) priority value in the machine tool priority value comparison step (S41), the control device 30 transmits an operation command to the servo motor 12 of the gantry loader 10 to cause the gantry loader 10 to move toward the machine tool 60.

In addition, in the peripheral-device-directed movement command step (S52), when the peripheral device state (Hn) priority value is equal to the gantry loader state (In) priority value in the gantry loader priority value comparison step (S40), or when the machine tool state (Gn) priority value is greater than the peripheral device state (Hn) priority value in the machine tool priority value comparison step (S41), the control device 30 transmits an operation command to the servo motor 12 of the gantry loader 10 to cause the gantry loader 10 to move toward the peripheral device 70.

Next, a movement-path interference determination step (S60) is executed.

This step is a step of determining whether interference with an adjacent gantry loader 10 occurs when the current gantry loader 10 receives a movement command and moves from the gantry loader current position (An) to the gantry loader target position (Bn), that is, the current gantry loader 10 moves to the machine tool 60 or the peripheral device 70. It is determined whether the current position (An-1) of the adjacent gantry loader is included in a path moving from the current gantry loader current position (An) to the gantry loader target position (Bn).

Next, a task priority determination step (S70) is executed.

In this step, when the current position (An-1) of the adjacent gantry loader is included in the path moving from the gantry loader current position (An) to the gantry loader target position (Bn) of the current gantry loader 10 in the movement-path interference determination step (S60) and interference with the adjacent gantry loader 10 occurs, the priority values by operating state of the current gantry loader 10 and the adjacent gantry loader 10 assigned in the priority assignment step (S30) are compared.

That is, it is determined whether a value obtained by adding the machine tool state (Gn) priority value or the peripheral device state (Hn) priority value to the gantry loader state (In) priority value of the current gantry loader 10 is smaller than a value obtained by adding the machine tool state (Gn-1) priority value or the peripheral device state (Hn-1) priority value to the gantry loader state (In-1) priority value of the adjacent gantry loader 10.

Based on a result of the determination, a gantry loader 10 having a lower priority is commanded to retreat to a predetermined safety area where it does not interfere with the movement of a gantry loader 10 having a higher priority to the target position (Bn) or to wait.

A step of commanding the gantry loader 10 having the lower priority to retreat to the safety area or to wait in this task priority determination step (S70) includes a safety area avoidance command step (S71) and a safety area waiting command step (S72).

First, the safety area avoidance command step (S71) commands the adjacent gantry loader 10 to retreat to a predetermined safety area that does not interfere with a path along which the current gantry loader 10 moves when the priority by operating state of the current gantry loader 10 is higher than the priority by operating state of the adjacent gantry loader 10 in this task priority determination step (S70).

More specifically, in the safety area avoidance command step (S71), when the value obtained by adding the machine tool state (Gn) priority value or the peripheral device state (Hn) priority value to the gantry loader state (In) priority value of the current gantry loader 10 is smaller than the value obtained by adding the machine tool state (Gn-1) priority value or the peripheral device state (Hn-1) priority value to the gantry loader state (In-1) priority value of the adjacent gantry loader 10 in this task priority determination step (S70), the control device 30 of the adjacent gantry loader 10 commands the adjacent gantry loader 10 to retreat to a predetermined safety area that does not interfere with a movement path of the current gantry loader 10.

In addition, the safety area waiting command step (S72) commands the current gantry loader 10 to wait in a predetermined safety area that does not interfere with a path along which the adjacent gantry loader 10 moves when the priority by operating state of the current gantry loader 10 is not higher than the priority by operating state of the adjacent gantry loader 10 in this task priority determination step (S70).

More specifically, in the safety area waiting command step (S72), when the value obtained by adding the machine tool state (Gn) priority value or the peripheral device state (Hn) priority value to the gantry loader state (In) priority value of the current gantry loader 10 is greater than the value obtained by adding the machine tool state (Gn-1) priority value or the peripheral device state (Hn-1) priority value to the gantry loader state (In-1) priority value of the adjacent gantry loader 10 in this task priority determination step (S70), the control device 30 of the current gantry loader 10 commands the current gantry loader 10 to wait in a predetermined safety area that does not interfere with a movement path of the adjacent gantry loader 10.

Meanwhile, the predetermined safety area in the safety area avoidance command step (S71) and the safety area waiting command step (S72) is set to a distance obtained by summing a mechanical non-contact distance (α) value which is capable of excluding contact between mechanical parts of the current gantry loader 10 and the adjacent gantry loader 10 and a braking distance (β) upon stopping at a maximum speed of the corresponding gantry loader 10.

Next, a task execution step (S80) is executed.

In this step, when interference with the adjacent gantry loader 10 does not occur in the current gantry loader 10 in the movement-path interference determination step (S60), the current gantry loader 10 is commanded to move to the gantry loader target position (Bn); and when interference with the adjacent gantry loader 10 occurs in the current gantry loader 10 in the movement-path interference determination step (S60), the gantry loader 10 having the higher priority is commanded to move to the gantry loader target position (Bn) as a result of comparing the priority values of the current gantry loader 10 and the adjacent gantry loader 10 in the task priority determination step (S70), and the control step is returned to the information acquisition step (S20) after the movement command.

As described in the above embodiment, the plurality of gantry loaders 10 installed on the single guide beam 20 is configured to supply or discharge workpieces while moving to the machine tool 60 or the peripheral device 70 on the guide beam 20 without causing collision or interference with each other according to task priorities, thereby improving machining productivity of the automation line.

Meanwhile, in another embodiment of the present invention, a situation may occur in which normal operation is impossible due to failure or the like among the plurality of gantry loaders 10 installed on the single guide beam 20 or among machine tools 60 cooperating with the gantry loaders 10. In this case, the control device 30 of the gantry loader 10 is configured to disable the gantry loader 10 or the machine tool 60, which is incapable of normal operation, to exclude it from the operation of the automation line, and continue to operate the automation line only with the gantry loader 10 or the machine tool 60 which is capable of normal operation, thereby managing the operation of the automation line without suspension.

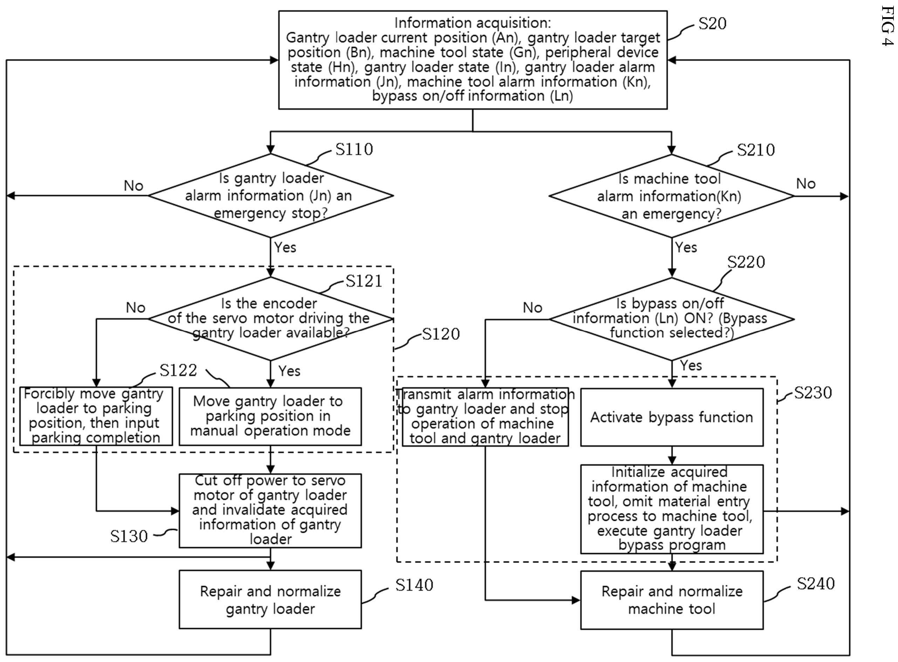

FIG. 4 is a control flowchart for disabling a failed gantry loader 10 or machine tool 60 among a plurality of gantry loaders 10 or among machine tools 60 cooperating with these gantry loaders 10 and excluding the same from an operation of an automation line, according to an embodiment of the present invention.

Referring to FIG. 4, after the information acquisition step (S20) of the above embodiment, the disabled gantry loader 10 or machine tool 60 may be excluded and the automation line may be continuously operated only with normal gantry loaders 10 or machine tools 60.

In this embodiment, in the information acquisition step (S20), each control device 30 for the plurality of gantry loaders 10 installed on the single guide beam 20 further acquires and recognizes gantry loader alarm information (Jn), machine tool alarm information (Kn), and bypass on/off information (Ln) in addition to the gantry loader current position (An), target position (Bn), machine tool state (Gn), peripheral device state (Hn), and gantry loader state (In) information.

The gantry loader alarm information (Jn) may include an alarm message (Message) for the purpose of warning, an operation stop (Cycle stop), and an emergency stop (Emergency). In this embodiment, the gantry loader alarm information (Jn) recognizes only an Emergency signal for convenience.

Meanwhile, regarding the gantry loader alarm information (Jn), machine tool alarm information (Kn), and bypass on/off information (Ln) which is added to the information acquisition step (S20), the gantry loader alarm information (Jn) and the bypass on/off information (Ln) may be generated in the control device 30 of the gantry loader 10, respectively, and the machine tool alarm information (Kn) may be generated in a control unit such as a numerical control device of the machine tool 60 and provided to the control device 30 of the gantry loader 10.

In addition, the information acquired in the control device 30 of each gantry loader 10 is also shared with control devices 30 of other gantry loaders 10 which are installed on the guide beam 20 through the communication line 40.

After the information acquisition step (S20), the control step may be divided into a gantry loader disabling control for excluding a disabled gantry loader 10 in the control device 30 and a machine tool disabling control for excluding a disabled machine tool 60.

First, the gantry loader disabling control process will be described.

The gantry loader disabling control to be executed after the information acquisition step (S20) consists of the following steps.

First, a gantry loader alarm information determination step (S110) is executed.

This step determines whether the gantry loader alarm information (Jn) acquired in the information acquisition step (S20) indicates an emergency stop, and returns the control step to the information acquisition step (S20) when the gantry loader alarm information (Jn) does not indicate an emergency stop, that is, when the gantry loader 10 is in normal operation.

Next, a gantry loader disabling processing step (S120) is executed.

In the gantry loader alarm information determination step (S110), when the gantry loader alarm information (Jn) indicates an emergency stop, the gantry loader (10) having the emergency stop alarm information (Jn) is moved to a parking position where interference with movement of an adjacent gantry loader (10) does not occur.

More specifically, the gantry loader disabling processing step (S120) may be divided into a gantry loader servo motor availability determination step (S121) and a gantry loader parking position movement step (S122), depending on whether the gantry loader (10) having the emergency stop alarm information (Jn) can be moved to the parking position by a servo motor (12) configured to drive the gantry loader (10).

First, the gantry loader servo motor availability determination step (S121) determines whether an encoder signal is generated in the servo motor (12) configured to perform movement of the gantry loader (10) in order to move the gantry loader (10) to the parking position when the gantry loader alarm information (Jn) indicates an emergency stop in the gantry loader alarm information determination step (S110). This is because of determine whether the gantry loader (10) can be moved by manually controlling the servo motor (12) when the encoder signal is normally generated in the servo motor (12).

Next, the gantry loader parking position movement step (S122) monitors the encoder signal of the servo motor (12) of the gantry loader (10) having the emergency stop alarm information (Jn) and arbitrarily controls the servo motor (12) in a manual mode to move the gantry loader (10) in the emergency stop state to the parking position where interference with movement of the adjacent gantry loader (10) does not occur, when it is determined that the encoder signal is generated in the servo motor (12) in the gantry loader servo motor availability determination step (S121). When it is determined that the encoder signal is not generated in the servo motor (12), the gantry loader (10) having the emergency stop alarm information (Jn) is forcibly moved to the parking position where interference with an operation of the adjacent gantry loader (10) does not occur, and then a current position (An) of the gantry loader to be disabled is inputted into the control device (30) as the parking position.

Next, an acquired information invalidation step (S130) is executed.

This step performs control of shutting off power to the servo motor (12) of the gantry loader (10) having the emergency stop alarm information (Jn), simultaneously invalidating information on the gantry loader (10) acquired in the information acquisition step (S20) to exclude the gantry loader (10) having the emergency stop alarm information (Jn) from control targets, and then returning the control step to the information acquisition step (S20).

That is, the disabled gantry loader (10) is moved to the parking position to prevent collision or interference with the adjacent gantry loader (10), and the information acquired in the information acquisition step (S20) is initialized and invalidated. However, information on the gantry loader current position (An) of the disabled gantry loader (10) is reset to the parking position. This is to prevent the acquired information of the gantry loader (10) that has been disabled and moved to the parking position from being used by the control device (30) to collide or interfere with another adjacent gantry loader (10) and to cause malfunction.

As described above, in this disabling action step (S130), the gantry loader (10) in which the emergency stop signal (Jn) is generated is processed to be disabled, enabling the automation line to continue operating only with the remaining gantry loaders (10).

Next, a gantry loader normalization step (S140) is executed.

This step executes control of repairing the gantry loader (10) to remove a cause of the emergency stop signal of the gantry loader (10) disabled in the acquired information invalidation step (S130), normalizing the disabled gantry loader (10), and returning the control step to the information acquisition step (S20). Accordingly, the disabled gantry loader (10) is normalized to operate the automation line normally in conjunction with the adjacent gantry loaders (10), thereby improving process efficiency.

As described in the above embodiment, when a specific gantry loader (10) fails among the plurality of gantry loaders (10) installed on the guide beam (20), the failed gantry loader (10) is moved to the parking position so as not to cause collision or interference with the adjacent gantry loader (10) and is processed to be disabled, so that the automation work can be continuously performed only with the normally operating gantry loaders (10) without stopping the entire automation line. Therefore, even if a specific gantry loader (10) fails, productivity of the automation line may be improved in a fact that the automation line can be continuously operated only with the normally operating gantry loaders (10) without stopping the entire automation line including the plurality of gantry loaders (10).

As another embodiment, referring to FIG. 4, a machine tool (60) disabling control for excluding a disabled machine tool (60) may be executed after the information acquisition step (S20) of the above embodiment as follows.

First, a machine tool alarm information determination step (S210) is executed.

This step determines whether the machine tool alarm information (Kn) acquired in the information acquisition step (S20) indicates an emergency, and returns the control step to the information acquisition step (S20) when the machine tool alarm information (Kn) does not indicate an emergency, that is, when the machine tool (60) can normally perform a workpiece supply or discharge operation with the gantry loader (10).

Next, a bypass function selection determination step (S220) is executed.

This step determines whether bypass on/off information (Ln) is selected as ON in the control device (30) to determine whether to make the gantry loader (10) bypass the machine tool (60) where the machine tool alarm information (Kn) is generated, when the machine tool alarm information (Kn) indicates an emergency in the machine tool alarm information determination step (S210).

Next, a machine tool disabling step (S230) is executed.

In this step, when the bypass on/off information (Ln) is selected as ON in the bypass function selection determination step (S220), a bypass function of the gantry loader (10) is activated to control the gantry loader (10) to omit a process of entering a workpiece into the machine tool (60) where the machine tool alarm information (Kn) is the emergency and to bypass the machine tool (60). Simultaneously, the acquired information on the machine tool (60) acquired in the information acquisition step (S20) is initialized, and the control step is returned to the information acquisition step (S20).

As such, when the machine tool alarm information (Kn) indicates an emergency but the bypass on/off information (Ln) is selected as ON, the gantry loader (10) bypasses the machine tool (60) where the emergency signal is generated, so that the automation line can be continuously operated without interruption.

In addition, in this step, when the bypass on/off information (Ln) is selected as OFF in the bypass function selection determination step (S220), the machine tool alarm information (Kn) is transmitted to the control device (30) of the gantry loader (10), and operations of the corresponding gantry loader (10) and the machine tool (60) where the machine tool alarm information (Kn) is generated are stopped.

Next, a machine tool normalization step (S240) is executed.

This step executes control of repairing the machine tool (60) where the machine tool alarm information (Kn) is generated to remove a cause of generation of the machine tool alarm information (Kn) of the machine tool (60) disabled in the machine tool disabling step (S230), normalizing the disabled machine tool (60), and returning the control step to the information acquisition step (S20).

Accordingly, the disabled machine tool (60) is normalized and operates the automation line normally in conjuction with the gantry loader (10).

As described in the above embodiment, when a failure occurs among machine tools (60) cooperating with the plurality of gantry loaders (10) installed on the guide beam (20), the failed machine tool (60) and the gantry loader (10) moving toward the corresponding machine tool (60) are stopped, or the gantry loader (10) bypasses the failed machine tool (60), thereby preventing collision or interference between the gantry loader (10) and the machine tool (60) due to the failed machine tool (60).Accordingly, by stopping only the failed machine tool (60) and making the gantry loader (10) bypass the failed machine tool (60), productivity of the automation line can be improved in a fact that the automation line can be continuously operated by stopping only the failed machine tool (60) , while not stopping the entire automation line processing the same workpiece.

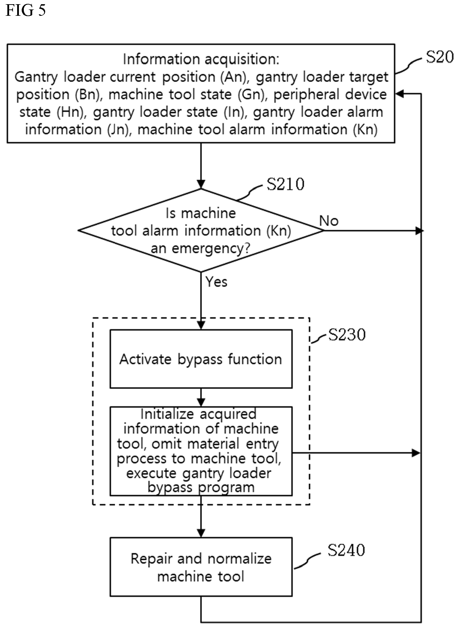

Meanwhile, as another embodiment, FIG. 5 is a control flowchart for excluding a disabled machine tool among machine tools cooperating with a gantry loader, according to another embodiment of the present invention.

Referring to FIG. 5, in the disabling control process of the machine tool (60) excluding the disabled machine tool (60), the bypass on/off information (Ln) is not acquired or is set to an ON state at all times in the information acquisition step (S20), and the bypass function selection determination step (S220) is omitted.

Therefore, in the machine tool disabling step (S230), when the machine tool alarm information (Kn) indicates an emergency in the machine tool alarm information determination step (S210), the bypass function of the gantry loader (10) is immediately activated to control the gantry loader (10) to omit a process of entering a workpiece into the machine tool (60) where the machine tool alarm information (Kn) is the emergency and to bypass the machine tool (60). Simultaneously, the acquired information on the machine tool (60) acquired in the information acquisition step (S20) is initialized, and the control is returned to the information acquisition step (S20).

In addition, in the machine tool normalization step (S240) after the machine tool disabling step (S230), as in the above embodiment, the machine tool (60), where the machine tool alarm information (Kn) is generated, is repaired to remove the cause of generation of the machine tool alarm information (Kn) of the machine tool (60) disabled in the machine tool disabling step (S230), the disabled machine tool (60) is normalized, and the control step is returned to the information acquisition step (S20).

As described in the above embodiments, by installing a plurality of gantry loaders (10) on a single guide beam (20) and causing operations of the gantry loaders (10) to be executed according to task priorities in an automation line operating in linkage with machine tools (60) and peripheral devices (70), productivity of the automation line is improved. Furthermore, even if a gantry loader (10) or a machine tool (60) fails, the automation line can be operated without interruption only with normally operating gantry loaders (10) or machine tools (60), thereby minimizing suspension of operation of the automation line.

In addition, the present invention can optimize the size of the automation line because a distance between respective gantry loaders (10) can be minimized through optimization control of each of the plurality of gantry loaders (10).

As described above, although the present invention has been described with reference to preferred embodiments, those skilled in the art will appreciate that various modifications and changes can be made to the present invention without departing from the spirit and scope of the present invention as set forth in the following claims.

### [Description of Reference Numerals]

10: Gantry loader
11: Arm
12: Servo motor
20: Guide beam
30: Control device
40: Communication line
60: Machine tool
70: Peripheral device
S10: Priority setting step
S20: Information acquisition step
S30: Priority assignment step
S40: Gantry loader priority value comparison step
S41: Machine tool priority value comparison step
S50: Gantry loader movement command step
S51: Machine-tool-directed movement command step
S52: Peripheral-device-directed movement command step
S60: Movement-path interference determination step
S70: Task priority determination step
S71: Safety area avoidance command step
S72: Safety area waiting command step
S80: Task execution step
S110: Gantry loader alarm information determination step
S120: Gantry loader disabling processing step
S121: Gantry loader servo motor availability determination step
S122: Gantry loader parking position movement step
S130: Gantry loader disabling action step
S140: Gantry loader normalization step
S210: Machine tool alarm information determination step
S220: Bypass function selection determination step
S230: Machine tool disabling step
S240: Machine tool normalization step

## Claims

1. A gantry loader control method in an automated line including a plurality of machine tools (60) configured to process a workpiece, a plurality of peripheral devices (70) configured to load the workpiece, and a plurality of gantry loaders (10) configured to reciprocate on a single guide beam (20) installed to allow the workpiece to be supplied or discharged between the machine tools (60) and the peripheral devices (70), wherein a control device (30) controls each of the gantry loaders (10) by sharing information with the machine tools (60) and the peripheral devices (70), the method comprising:
a priority setting step (S10) of setting a control priority for each operating state of the gantry loader (10), the machine tool (60), and the peripheral device (70);
an information acquisition step (S20) of acquiring, by the control device (30) for controlling the plurality of gantry loaders (10), information on each of the gantry loaders (10), the machine tools (60), and the peripheral devices (70), and sharing the information with a control device (30) of an adjacent gantry loader (10) through a communication line (40);
a priority assignment step (S30) of assigning priority values set in the priority setting step (S10) to respective variables corresponding to the gantry loader (10), the machine tool (60), and the peripheral device (70), based on the information acquired in the information acquisition step (S20);
a gantry loader priority comparison step (S40) of comparing whether a priority of the gantry loader (10) is equal to a priority of the machine tool (60) or the peripheral device (70);
a machine tool priority comparison step (S41) of comparing a priority value of the machine tool (60) with a priority value of the peripheral device (70), when the priority of the gantry loader (10) in the gantry loader priority comparison step (S40) is not equal to the priority of the machine tool (60) or the peripheral device (70);
a gantry loader movement command step (S50) comprising either a machine-tool-directed movement command step (S51) of commanding the gantry loader (10) to move toward the machine tool (60), or a peripheral-device-directed movement command step (S52) of commanding the gantry loader (10) to move toward the peripheral device (70);
a movement-path interference determination step (S60) of determining whether a current position (An-1) of an adjacent gantry loader is included in a movement path of the gantry loader (10) when the gantry loader (10) moves from a gantry loader current position (An) to a gantry loader target position (Bn) in response to a movement command;
a task priority determination step (S70) of, when the adjacent gantry loader current position (An-1) is included in the movement path of the gantry loader (10) in the movement-path interference determination step (S60), comparing and determining the priority values of the current gantry loader (10) and the adjacent gantry loader (10) assigned in the priority assignment step (S30), and commanding the gantry loaders (10) with a lower-priority, based on a result of the determination, to retreat to or wait in a predetermined safety area in which gantry loader (10) with a higher-priority is not interfered in moving to the target position (Bn); and
a task execution step (S80) of commanding the current gantry loader (10) to move to the gantry loader target position (Bn) when interference with the adjacent gantry loader (10) does not occur in the current gantry loader (10) in the movement-path interference determination step (S60), and commanding the gantry loader (10) with the higher priority to move to the gantry loader target position (Bn) as a result of comparing the priority values of the current gantry loader (10) and the adjacent gantry loader (10) in the task priority determination step (S70) when interference occurs between the current gantry loader (10) and the adjacent gantry loader (10), and then returning to the information acquisition step (S20) after the movement command of the gantry loader 10 with the higher priority.

2. The gantry loader control method of claim 1, wherein, in the priority setting step (S10), based on the content of a control signal for operating the gantry loader (10) and the machine tool (60) or the peripheral device (70), the control priority for each operating state comprises: a first priority when the gantry loader (10) is in a state of waiting to input or discharge a workpiece to or from the machine tool (60); a second priority when the gantry loader (10) is in a state of receiving a pre-call to handle a workpiece; a third priority when the gantry loader (10) is in a state of discharging a workpiece from the peripheral device (70); and a fourth priority when the gantry loader (10) is in a state of loading a workpiece into the peripheral device (70).

3. The gantry loader control method of claim 1, wherein the information acquired in the information acquisition step (S20) includes information on the gantry loader current position (An), the gantry loader target position (Bn), a machine tool state (Gn), a peripheral device state (Hn), and a gantry loader state (In).

4. The gantry loader control method of claim 3, wherein the information acquired in the information acquisition step (S20) further includes gantry loader alarm information (Jn), machine tool alarm information (Kn), and bypass on/off information (Ln).

5. The gantry loader control method of claim 1, wherein in the priority assignment step (S30), when the gantry loader (10) is gripping a workpiece, a priority value according to the gantry loader state (In) becomes 1; when the machine tool (60) is waiting after completion of workpiece machining, a priority value according to the machine tool state (Gn) becomes 1; and when the peripheral device (70) is waiting to discharge a workpiece, a priority value according to the peripheral device state (Hn) becomes 3.

6. The gantry loader control method of claim 1, wherein the gantry loader priority comparison step (S40) compares the priority value according to the gantry loader state (In) assigned in the priority assignment step (S30) with the machine tool state (Gn) priority value and the peripheral device state (Hn) priority value, and determines whether the machine tool state (Gn) priority value is equal to the gantry loader state (In) priority value or whether the peripheral device state (Hn) priority value is equal to the gantry loader state (In) priority value.

7. The gantry loader control method of claim 1, wherein the machine tool priority comparison step (S41) compares whether the machine tool state (Gn) priority value is greater or smaller than the peripheral device state (Hn) priority value when the machine tool state (Gn) priority value is not equal to the gantry loader state (In) priority value, or the peripheral device state (Hn) priority value is not equal to the gantry loader state (In) priority value.

8. The gantry loader control method of claim 1, wherein the machine-tool-directed movement command step (S51) transmits an operation command to a servo motor (12) to cause the gantry loader (10) to move toward the machine tool (60) when the machine tool state (Gn) priority value is equal to the gantry loader state (In) priority value in the gantry loader priority comparison step (S40), or when the machine tool state (Gn) priority value is smaller than the peripheral device state (Hn) priority value in the machine tool priority comparison step (S41); and
the peripheral-device-directed movement command step (S52) transmits an operation command to the servo motor (12) to cause the gantry loader (10) to move toward the peripheral device (70) when the peripheral device state (Hn) priority value is equal to the gantry loader state (In) priority value in the gantry loader priority comparison step (S40), or when the machine tool state (Gn) priority value is greater than the peripheral device state (Hn) priority value in the machine tool priority comparison step (S41).

9. The gantry loader control method of claim 1, wherein the comparison of priority values between the current gantry loader (10) and the adjacent gantry loader (10) assigned in the priority assignment step (S30) in the task priority determination step (S70) determines whether a value obtained by adding the machine tool state (Gn) priority value or the peripheral device state (Hn) priority value to the gantry loader state (In) priority value of the current gantry loader (10) is smaller than a value obtained by adding the machine tool state (Gn-1) priority value or the peripheral device state (Hn-1) priority value to the gantry loader state (In-1) priority value of the adjacent gantry loader (10).

10. The gantry loader control method of claim 1, wherein the task priority determination step (S70) comprises a safety area avoidance command step (S71) of commanding the adjacent gantry loader (10) to retreat to a predetermined safety area that does not interfere with a path along which the current gantry loader (10) moves when the priority by operating state of the current gantry loader (10) is higher than the priority by operating state of the adjacent gantry loader (10); and
a safety area waiting command step (S72) of commanding the current gantry loader (10) to wait in a predetermined safety area that does not interfere with a path along which the adjacent gantry loader (10) moves when the priority by operating state of the current gantry loader (10) is lower than the priority by operating state of the adjacent gantry loader (10).

11. The gantry loader control method of claim 10, wherein the predetermined safety area in the safety area avoidance command step (S71) and the safety area waiting command step (S72) is set to a distance obtained by adding a mechanical non-contact distance (α) value capable of excluding contact between mechanical parts of the current gantry loader (10) and the adjacent gantry loader (10) and a braking distance (β) upon stopping at a maximum speed of the corresponding gantry loader (10).

12. The gantry loader control method of claim 1, further comprising:
a gantry loader alarm information determination step (S110) of determining whether gantry loader alarm information (Jn) acquired in the information acquisition step (S20) indicates an emergency stop after the information acquisition step (S20), and returning the control step to the information acquisition step (S20) when the gantry loader alarm information (Jn) does not indicate an emergency stop;
a gantry loader disabling processing step (S120) of moving a gantry loader (10) whose gantry loader alarm information (Jn) is the emergency stop to a parking position where interference with movement of the adjacent gantry loader (10) does not occur when the gantry loader alarm information (Jn) indicates an emergency stop in the gantry loader alarm information determination step (S110);
an acquired information invalidation step (S130) of shutting off power to the servo motor (12) of the gantry loader (10) whose gantry loader alarm information (Jn) is the emergency stop, simultaneously invalidating information on the gantry loader (10) acquired in the information acquisition step (S20) to exclude the gantry loader (10) whose gantry loader alarm information (Jn) is the emergency stop from a control target, and then returning the control step to the information acquisition step (S20); and
a gantry loader normalization step (S140) of removing a cause of an emergency stop signal of the gantry loader (10) disabled in the acquired information invalidation step (S130) to normalize the disabled gantry loader (10), and returning the control step to the information acquisition step (S20).

13. The gantry loader control method of claim 12, wherein the gantry loader disabling processing step (S120) comprises: a gantry loader servo motor availability determination step (S121) of determining whether an encoder signal is generated in the servo motor (12) performing movement of the gantry loader (10); and
a gantry loader parking position movement step (S122) of controlling the servo motor (12) of the gantry loader (10) whose gantry loader alarm information (Jn) is the emergency stop in a manual mode to move the gantry loader (10) in the emergency stop state to the parking position where interference with movement of the adjacent gantry loader (10) does not occur when it is determined that the encoder signal is generated in the servo motor (12) in the gantry loader servo motor availability determination step (S121), and forcibly moving the gantry loader (10) whose gantry loader alarm information (Jn) is the emergency stop to the parking position where interference with an operation of the adjacent gantry loader (10) does not occur when it is determined that the encoder signal is not generated in the servo motor (12), and inputting a gantry loader current position (An) to be disabled into the control device (30) as the parking position after the forced movement to the parking position.

14. The gantry loader control method of claim 12, wherein after the acquired information invalidation step (S130), information on the current position (An) of the disabled gantry loader (10) is reset to the parking position.

15. The gantry loader control method of claim 1, further comprising:
a machine tool alarm information determination step (S210) of determining whether machine tool alarm information (Kn) acquired in the information acquisition step (S20) indicates an emergency after the information acquisition step (S20), and returning the control step to the information acquisition step (S20) if the machine tool alarm information (Kn) indicates an emergency;
a bypass function selection determination step (S220) of determining whether bypass on/off information (Ln) is selected as ON in the control device (30) to determine whether to make the gantry loader (10) bypass the machine tool (60) where the machine tool alarm information (Kn) is generated, when the machine tool alarm information (Kn) indicates an emergency in the machine tool alarm information determination step (S210);
a machine tool disabling step (S230) of, when the bypass on/off information (Ln) is selected as ON in the bypass function selection determination step (S220), activating a bypass function of the gantry loader (10) to control the gantry loader (10) to omit a process of entering a workpiece into the machine tool (60) where the machine tool alarm information (Kn) is the emergency and to bypass the machine tool (60), simultaneously initializing acquired information on the machine tool (60) acquired in the information acquisition step (S20), and controlling the control step to return to the information acquisition step (S20); and when the bypass on/off information (Ln) is selected as OFF in the bypass function selection determination step (S220), transmitting the machine tool alarm information (Kn) to the control device (30) of the gantry loader (10) and stopping operations of the corresponding gantry loader (10) and the machine tool (60) where the machine tool alarm information (Kn) is generated; and
a machine tool normalization step (S240) of repairing the machine tool (60) where the machine tool alarm information (Kn) is generated in the machine tool disabling step (S230), normalizing the disabled machine tool (60), and returning to the information acquisition step (S20).

16. The gantry loader control method of claim 1, further comprising:
a machine tool alarm information determination step (S210) of determining whether machine tool alarm information (Kn) acquired in the information acquisition step (S20) indicates an emergency after the information acquisition step (S20), and returning the control step to the information acquisition step (S20) if the machine tool alarm information (Kn) indicates an emergency;
a machine tool disabling step (S230) of, when the machine tool alarm information (Kn) indicates an emergency in the machine tool alarm information determination step (S210), activating a bypass function of the gantry loader (10) to control the gantry loader (10) to omit a process of entering a workpiece into the machine tool (60) where the machine tool alarm information (Kn) is the emergency and to bypass the machine tool (60), simultaneously initializing acquired information on the machine tool (60) acquired in the information acquisition step (S20), and controlling the control step to return to the information acquisition step (S20);
and
a machine tool normalization step (S240) of repairing the machine tool (60) where the machine tool alarm information (Kn) is generated in the machine tool disabling step (S230), normalizing the disabled machine tool (60), and returning to the information acquisition step (S20).

17. A gantry loader control method in an automated line including a plurality of machine tools (60) configured to process a workpiece, a plurality of peripheral devices (70) configured to load the workpiece, and a plurality of gantry loaders (10) configured to reciprocate on a single guide beam (20) to allow the workpiece to be supplied or discharged between the machine tools (60) and the peripheral devices (70), wherein a control device (30) controls each of the gantry loaders (10) by sharing information with the machine tools (60) and the peripheral devices (70), the method comprising:
an information acquisition step (S20) of acquiring, by the control device (30) for controlling the plurality of gantry loaders (10), gantry loader alarm information (Jn) of each of the gantry loaders (10), and sharing the information with a control device (30) of an adjacent gantry loader (10) through a communication line (40);
a gantry loader alarm information determination step (S110) of determining whether the gantry loader alarm information (Jn) acquired in the information acquisition step (S20) indicates an emergency stop, and returning a control step to the information acquisition step (S20) when the gantry loader alarm information (Jn) does not indicate an emergency stop;
a gantry loader disabling processing step (S120) of moving a gantry loader (10) whose gantry loader alarm information (Jn) is the emergency stop to a parking position where interference with movement of the adjacent gantry loader (10) does not occur when the gantry loader alarm information (Jn) indicates an emergency stop in the gantry loader alarm information determination step (S110);
an acquired information invalidation step (S130) of shutting off power to the servo motor (12) of the gantry loader (10) whose gantry loader alarm information (Jn) is the emergency stop, simultaneously invalidating information on the gantry loader (10) acquired in the information acquisition step (S20) to exclude the gantry loader (10) whose gantry loader alarm information (Jn) is the emergency stop from a control target, and then returning the control step to the information acquisition step (S20); and
a gantry loader normalization step (S140) of removing a cause of an emergency stop signal of the gantry loader (10) disabled in the acquired information invalidation step (S130) to normalize the disabled gantry loader (10), and returning the control step to the information acquisition step (S20).

18. The gantry loader control method of claim 17, wherein the gantry loader disabling processing step (S120) comprises: a gantry loader servo motor availability determination step (S121) of determining whether an encoder signal is generated in the servo motor (12) performing movement of the gantry loader (10); and
a gantry loader parking position movement step (S122) of controlling the servo motor (12) of the gantry loader (10) whose gantry loader alarm information (Jn) is the emergency stop in a manual mode to move the gantry loader (10) in the emergency stop state to the parking position where interference with movement of the adjacent gantry loader (10) does not occur if it is determined that the encoder signal is generated in the servo motor (12) in the gantry loader servo motor availability determination step (S121), and forcibly moving the gantry loader (10) whose gantry loader alarm information (Jn) is the emergency stop to the parking position where interference with an operation of the adjacent gantry loader (10) does not occur if it is determined that the encoder signal is not generated in the servo motor (12), and inputting a gantry loader current position (An) to be disabled into the control device (30) as the parking position after the forced movement to the parking position.

19. The gantry loader control method of claim 17, wherein after the acquired information invalidation step (S130), information on the current position (An) of the disabled gantry loader (10) is reset to the parking position.

20. A gantry loader control method in an automated line including a plurality of machine tools (60) configured to process a workpiece, a plurality of peripheral devices (70) configured to load the workpiece, and a plurality of gantry loaders (10) configured to reciprocate on a single guide beam (20) installed to allow the workpiece to be supplied or discharged between the machine tools (60) and the peripheral devices (70), wherein a control device (30) controls each of the gantry loaders (10) by sharing information with the machine tools (60) and the peripheral devices (70), the method comprising:
an information acquisition step (S20) of acquiring information on each of the gantry loaders (10) and the machine tools (60) in the control device (30) for controlling the plurality of gantry loaders (10), and sharing the information with a control device (30) of an adjacent gantry loader (10) through a communication line (40);
a machine tool alarm information determination step (S210) of determining whether machine tool alarm information (Kn) acquired in the information acquisition step (S20) indicates an emergency, and returning a control step to the information acquisition step (S20) when the machine tool alarm information (Kn) indicates an emergency;
a bypass function selection determination step (S220) of determining whether bypass on/off information (Ln) is selected as ON in the control device (30) to determine whether to make the gantry loader (10) bypass the machine tool (60) where the machine tool alarm information (Kn) is generated, when the machine tool alarm information (Kn) indicates an emergency in the machine tool alarm information determination step (S210);
a machine tool disabling step (S230) of, when the bypass on/off information (Ln) is selected as ON in the bypass function selection determination step (S220), activating a bypass function of the gantry loader (10) to control the gantry loader (10) to omit a process of entering a workpiece into the machine tool (60) where the machine tool alarm information (Kn) is the emergency and to bypass the machine tool (60), simultaneously initializing acquired information on the machine tool (60) acquired in the information acquisition step (S20), and controlling the control step to return to the information acquisition step (S20); and when the bypass on/off information (Ln) is selected as OFF in the bypass function selection determination step (S220), transmitting the machine tool alarm information (Kn) to the control device (30) of the gantry loader (10) and stopping operations of the corresponding gantry loader (10) and the machine tool (60) where the machine tool alarm information (Kn) is generated; and
a machine tool normalization step (S240) of repairing the machine tool (60) where the machine tool alarm information (Kn) is generated in the machine tool disabling step (S230), normalizing the disabled machine tool (60), and returning the control step to the information acquisition step (S20).

21. A gantry loader control method in an automated line including a plurality of machine tools (60) configured to process a workpiece, a plurality of peripheral devices (70) configured to load the workpiece, and a plurality of gantry loaders (10) configured to reciprocate on a single guide beam (20) to allow the workpiece to be supplied or discharged between the machine tools (60) and the peripheral devices (70), wherein a control device (30) controls each of the gantry loaders (10) by sharing information with the machine tools (60) and the peripheral devices (70), the method comprising:
an information acquisition step (S20) of acquiring information on each of the gantry loaders (10) and the machine tools (60) in the control device (30) for controlling the plurality of gantry loaders (10), and sharing the information with a control device (30) of an adjacent gantry loader (10) through a communication line (40);
a machine tool alarm information determination step (S210) of determining whether machine tool alarm information (Kn) acquired in the information acquisition step (S20) indicates an emergency, and returning a control step to the information acquisition step (S20) when the machine tool alarm information (Kn) indicates an emergency;
a machine tool disabling step (S230) of, when the machine tool alarm information (Kn) indicates an emergency in the machine tool alarm information determination step (S210), activating a bypass function of the gantry loader (10) to control the gantry loader (10) to omit a process of entering a workpiece into the machine tool (60) where the machine tool alarm information (Kn) is the emergency and to bypass the machine tool (60), simultaneously initializing acquired information on the machine tool (60) acquired in the information acquisition step (S20), and controlling the control step to return to the information acquisition step (S20);
and
a machine tool normalization step (S240) of repairing the machine tool (60) where the machine tool alarm information (Kn) is generated in the machine tool disabling step (S230), normalizing the disabled machine tool (60), and returning the control step to the information acquisition step (S20).
